# EUROPÄISCHE PATENTSCHRIFT

(11) **EP 0 361 225 B1**
(45) Veröffentlichungstag und Bekanntmachung des Hinweises auf die Patenterteilung: **07.12.1994**
(21) Anmeldenummer: 89117080.5
(22) Anmeldetag: 15.09.1989
(51) Int. Cl.: B01D 53/18, F28F 25/08, C02F 3/10

(54) **Füllkörper**
Filling element
Elément de remplissage

(30) Priorität: 19.09.1988 AT 2281/88; 28.11.1988 AT 2916/88
(43) Veröffentlichungstag der Anmeldung: 04.04.1990
(73) Patentinhaber: FAIGLE KUNSTSTOFFE GESELLSCHAFT M.B.H., A-6971 Hard (AT)
(72) Erfinder: Faigle, Heinz, A-6971 Hard (AT)
(74) Vertreter: Hefel, Herbert, Dipl.-Ing.

(56) Entgegenhaltungen:
- EP-A- 0 115 455
- DE-A- 1 809 095
- DE-B- 1 293 796
- DE-C- 654 827

## Beschreibung

Die Erfindung bezieht sich auf einen Füllkörper mit den Merkmalen des Oberbegriffes des Patentanspruches 1.

Solche Füllkörper verwendet man zumeist zum direkten Energieaustausch, bei dem die energietauschenden Medien in unmittelbarem Kontakt stehen, also ohne durch eine Wand getrennt zu sein, beispielsweise beim Wärmeaustausch in Kühltürmen, zum direkten Stoffaustausch zwischen Medien, beispielsweise beim Verdunstungskühlanteil in Kühltürmen oder bei Stripprozessen, zur Reaktion zwischen Medien, beispielsweise in chemischen Kolonnen, zur Förderung biologischer Abläufe, beispielsweise in Tropfkörpern zur Abwasserreinigung, für Separationsvorgänge, beispielsweise Tropfenabscheidern in Kühltürmen, für Flüssigkeitsverteiler, Luftzubringer und ähnliche Anwendungen (DE-A-31 10 859, DE-A-36 25 809, DE-C-30 16 274, DE-B-25 09 570, DE-C-21 22 537, DE-B-12 87 096, DE-A-31 36 589, DE-A-30 48 968).

Diese Füllkörper werden von Medien von oben nach unten bzw. von unten nach oben durchströmt, und die Reaktion zwischen diesen gegeneinanderströmenden Medien ist unter anderem umso intensiver, je länger der Weg für diese Medien durch den Füllkörper ist, je länger also die Verweilzeit innerhalb des Füllkörpers dauert. Da diese Füllkörper nicht beliebig hoch gebaut werden können, geht das Bestreben unter anderem dahin, im Bereich der zur Verfügung stehenden Höhe den Weg für die Medien durch den Füllkörper möglichst lange zu gestalten. Diesem Zweck dient auch der drallgebende Füllkörper nach der SU-A-1 136 830. Aus axial nacheinander zusammengefügten Rohrabschnitten sind schlauchähnliche, schraubenartig verlaufende Kanäle gebildet. Diese Kanäle sind darüberhinaus in konzentrischen Schichten schraubenartig übereinandergewunden. Jede Schichte besteht dabei aus unmittelbar aneinanderliegenden Kanälen. Jede Schichte hat gegenüber der unteren bzw. über ihr liegenden Schichte einen gegenläufigen Drehsinn. Der Aufwand für die Herstellung eines solchen Füllkörpers ist enorm, was auch der Grund dafür sein dürfte, daß Füllkörper dieser Art bislang offenbar den Weg in die Praxis nicht gefunden haben.

Die gegenständliche Erfindung hat sich daher zur Aufgabe gestellt, einen Füllkörper konstruktiv so zu gestalten, daß er einfach hergestellt werden kann und durch seine besondere konstruktive Gestalt die gleiche Effizienz wie die oben genannte Konstruktion erreicht.

Zur Lösung dieser Aufgabe schlägt die Erfindung jene Maßnahmen vor, die Inhalt und Gegenstand des kennzeichnenden Teiles des Patentanspruches 1 sind.

Je nach Fertigungstechnologie bzw. Einsatzzweck verlaufen die Hüllkurven über die Länge einer Rinne stetig oder aber sie bestehen aus im wesentlich geraden Abschnitten. Um ferner das erfindungsgemäße Ziel zu erreichen ist es zweckmäßig, daß die Rinnen bzw. die Kanäle über ihre Länge eine ausreichende Krümmung oder Windung besitzen und zu diesem Zweck ist vorgesehen, daß in Achsrichtung der schraubenlinienartigen Hüllkurven gesehen die einer Rinne zugeordneten Hüllkurven dieser Achsprojektion einander tangieren bzw. überschneiden. Über die Länge einer Rinne kann die Hüllkurve einen Drehwinkel von 360° oder mehr aufweisen. Je nach Einsatzzweck ist es aber auch möglich, diesen Drehwinkei kleiner als 360° zu gestalten.

Um das Eindringen der verschiedenartigen Medien in die Füllkörper zu erleichtern, ist weiterhin vorgesehen, daß die Hüllkurven bzw. die Achsen der Durchlaßkanäle im randnahen Bereich einer Platte einen im wesentlichen gerade verlaufenden und zum Rand der Platte rechtwinklig stehenden Abschnitt aufweisen, so daß die zu einem Füllkörper zusammengeschichteten Plattenpakete oder Rohrpakete gerade und offene Einlaufzonen aufweisen.

Maßnahmen, die besonders die Intensivierung des Kontaktes zwischen den sich direkt berührenden Medien dienen, können darin bestehen, daß in Achsrichtung der schraubenlinienartigen Hüllkurven gesehen die einer Rinne zugeordneten Hüllkurven sich als Ovale darstellen. Eine weitere Möglichkeit besteht darin, daß in Achsrichtung der schraublinienartigen Hüllkurve gesehen, die einer Rinne zugeordneten Hüllkurven sich als Vielecke, insbesondere als Rhomben darstellen. Auch können für diesen Zweck die schraubenlinienartig verlaufenden Hüllkurven über die Länge der Rinne eine unterschiedliche Steigung aufweisen. Das Gleiche gilt sinngemäß auch für die Achsen der umfangsgeschlossenen Durchlaßkanäle. Weitere Maßnahmen liegen darin, daß mindestens einzelne Rinnen einer Platte wenigstens auf einem Teil ihrer Wandung beulenartige Aus-bzw. Einbuchtungen aufweisen und die gedachte Verbindungslinie von entlang einer Rinne aufeinander folgenden Ein- bzw. Ausbuchtungen nach Art einer Schraubenlinie verlaufen. Ferner, daß die gedachte schraubenlinienartig verlaufende Verbindungslinie mit der Hüllkurve der äußeren Ecken bzw. äußeren Randbereiche der Rinne gleichlaufend liegt und daß die gedachte schraubenlinienartig verlaufende Verbindungslinie mit der Hüllkurve der äußeren Ecken bzw. äußeren Randbereiche der Rinne gegenläufig liegt.

Die Füllkörper werden - wie schon erwähnt - dadurch gebildet, daß Platten der vorstehend beschriebenen und gekennzeichneten Art aneinander geschichtet werden und so ein Paket bilden. Liegen die Hüllkurven von innerhalb eines Paketes unmittelbar benachbarter Platten aneinander an, so bilden die Rinnen dieser Platten umfangsgeschlossene, räumlich gewundene Kanäle. Innerhalb eines Paketes können diese Hüllkurven unmittelbar benachbarter Platten aber auch miteinander einen Winkel einschließen, so daß sich die räumlich gewundenen Rinnen benachbarter Platten kreuzen.

Die Querschnittsarten- und Querschnittsgrößen-Verhältnisse zwischen den Durchlaßkanälen und den versetzt dazwischenliegenden Zwischenraumkanälen muß dabei nicht unbedingt gleich sein.

Der der Erfindung zugrundeliegende Gedanke kann in zahlreichen Ausführungsformen realisiert werden. Dies wird anhand der Zeichnungen näher erläutert.

Es zeigen:
- Fig. 1: eine Platte eines Füllkörpers einer ersten Ausführungsform in Draufsicht;
- Fig. 2: in Seitensicht, Blickrichtung Pfeil II in Fig. 1;
- Fig. 3: eine Seitensicht in Blickrichtung des Pfeiles III in Fig. 1;
- Fig. 4: eine Schrägsicht;
- Fig. 5: einen Füllkörper, gebildet aus mehreren Platten nach den Fig. 1 bis 4, die Blickrichtung auf diesen Füllkörper entspricht dem Pfeil II in Fig. 1;
- Fig. 6: eine Platte einer zweiten Ausführungsform in Draufsicht;
- Fig. 7: in Seitensicht, Blickrichtung Pfeil IV in Fig. 6;
- Fig. 8: eine Seitensicht in Blickrichtung des Pfeiles V in Fig. 6 und
- Fig. 9: eine Schrägsicht
- Fig. 10: einen Füllkörper, gebildet aus mehreren nebeneinander liegenden Platten nach den Fig. 6 bis 9, die Blickrichtung entspricht hier dem Pfeil IV in Fig. 6;
- Fig. 11: ein Erläuterungsschema.

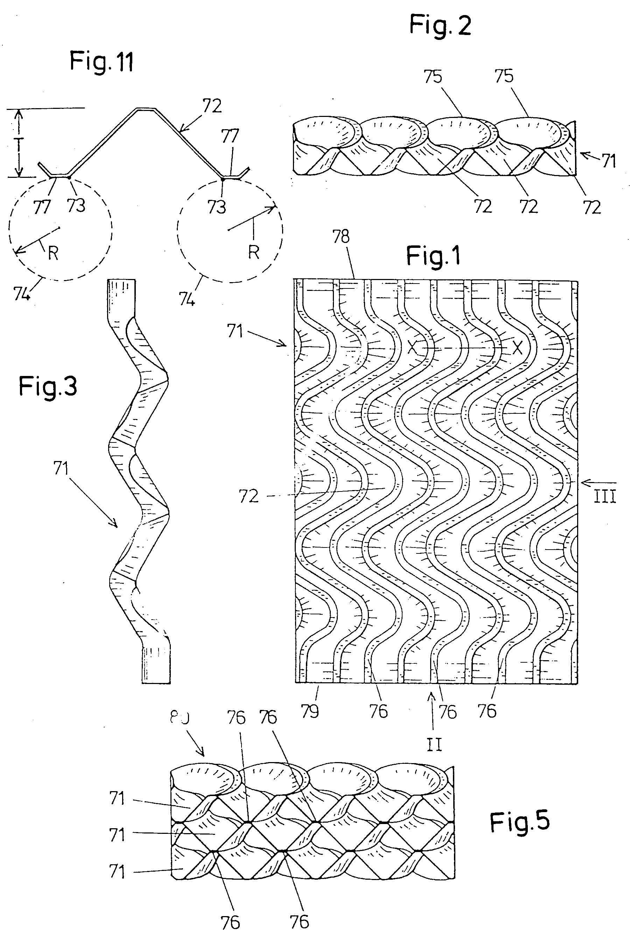

Die Platte 71 eines ersten Ausführungsbeispieles für einen Füllkörper ist in Draufsicht und in zwei Seitensichten in den Fig. 1 bis 3 veranschaulicht. Die Platte 71 besteht aus einer entsprechend stabilen Kunststoff-Folie und ist über ihre Oberfläche räumlich verformt, was insbesondere die beiden Seitensichten nach den Fig. 2 und 3 verdeutlichen. Um diese räumliche Verformung anschaulich zu machen, wird unter Bezug auf Fig. 11 folgendes Gedankenexperiment durchgeführt, das in korrespondierender Weise auch für die Platten der anderen Ausführungsbeispiele dient. Durch die Platte 71 wird ein Teilquerschnitt X - X gelegt, und in Fig. 11 ist in einem gegenüber den anderen Darstellungen vergrößertem Maßstab die Querschnittslinie wiedergegeben, die hier eine nach unten offene Rinne 72 veranschaulicht, deren äußere Ecken bzw. Ränder mit 73 bezeichnet sind. Um nun zur Platte 71 bzw. zu einer Rinne 72 dieser Platte zu gelangen, führt diese in Fig. 11 dargestellte Querschnittslinie oder Erzeugende zwei einander überlagernde Bewegungen aus, nämlich eine lineare gerade Bewegung, rechtwinkelig zur Zeichenebene und eine Bewegung auf einer umfangsgeschlossenen Bahn, beispielsweise auf einem Kreis, was hier in Fig. 11 durch die strichlierte Linie 74 angedeutet ist, mit der Folge, daß die Hüllkurven der Ecken bzw. Ränder 73 nach Art einer Schraubenlinie verlaufen. Dabei behält die Querschnittskontur im wesentlichen ihre richtungsbezogene Lage im Raume bei. Die Halbmesser R dieser umfangsgeschlossenen Bewegungsbahn kann in weiten Grenzen variieren. Beim Ausführungsbeispiel nach den Fig. 1 bis 3 wurde als umfangsgeschlossene Bewegungsbahn ein Oval 75 gewählt, was übrigens aus Fig. 2 deutlich erkennbar ist, wobei die größere Achse dieses Ovales etwa parallel zur mittleren Ebene der Platte 71 liegt und der mittlere Radius dieses Ovals ungefähr der halben Höhe bzw. Tiefe T der Rinne 72 entspricht. Die Erzeugende (Fig. 11) der Rinne 72 beschreibt dann eine räumlich verformte Fläche. In Fig. 11 ist eine Querschnittskontur einer Rinne 72 der Platte 71 dargestellt. Wird nun die hier in Fig. 11 gezeigte Querschnittslinie der Rinne 72 nach beiden Seiten hin verlängert, wobei sich die dargestellte Form periodisch wiederholt, und die so erhaltene Linie als Erzeugende im beschriebenen Sinne bewegt, so wird dadurch die Fläche der Platte 71 beschrieben. Der räumlich gewundene Verlauf der einzelnen Rinnen 72 veranschaulicht deutlich die Schrägsicht auf diese Platte nach Fig. 4. Da die Ecken bzw. Ränder 73 der Querschnittslinie der Rinnen 72 (Fig. 11) in schmale Abflachungen 77 auslaufen, bevor sie in die nächste seitlich anschließende Rinne übergehen, bilden diese Abflachungen 77 räumlich gewundene schmale Bänder, die hier als Hüllkurve 76 bezeichnet werden.

Sowohl aus Fig. 1 wie auch aus Fig. 4 ist ersichtlich, daß die Hüllkurve 76 einer Rinne 72 im randnahen Bereich einer Platte 71 einen im wesentlichen gerade verlaufenden und zu den oberen und unteren Rändern 78 und 79 der Platte 71 rechtwinkelig stehenden Abschnitt aufweisen.

Gleichgeformte Platten 71 mit der beschriebenen Konfiguration werden nun zu Füllkörpern 80 zusammengeschichtet, wobei die Hüllkurve 76 von innerhalb eines Füllkörpers 80 unmittelbar benachbarter Platte 71 aneinander anliegen und die Rinnen auf diese Weise im wesentlichen umfangsgeschlossene räumlich gewundene Kanäle innerhalb des Füllkörpers bilden. Ein solcher Füllkörper ist in Fig. 5 dargestellt bzw. ein Teil eines solchen Füllkörpers, der hier aus drei Platten 71 aufgebaut ist, wobei auf den oberen Rand in der Richtung des Pfeiles II aus Fig. 1 auf diesen Teil des Füllkörpers geblickt wird. Es ist aber auch möglich, daß die Hüllkurve von innerhalb eines Paketes unmittelbar benachbarter Platten miteinander einen Winkel einschließen, so daß die räumlich gewundenen Rinnen 72 benachbart Platten sich kreuzen. Dieser Kreuzungswinkel kann in weiten Grenzen differieren. Je nach Einsatzzweck wird die eine oder andere Anordnung gewählt werden.

Es ist aus Fig. 1 auch ersichtlich, daß die Hüllkurven einer Rinne im randnahen Bereich einer Platte einen im wesentlichen gerade verlaufenden und zum Rand der Platte rechtwinklig stehenden Abschnitt aufweisen. Werden also mehrere Platten, wie aus Fig. 1 ersichtlich und mit den geschilderten Merkmalen zu Paketen (Fig. 5) zusammengelegt, so besitzen die räumlich gewundenen, von den Rinnen 72 begrenzten Kanäle im oberen und unteren Randbereich 78, 79 für die Medien gerade verlaufende Einlaufzonen.

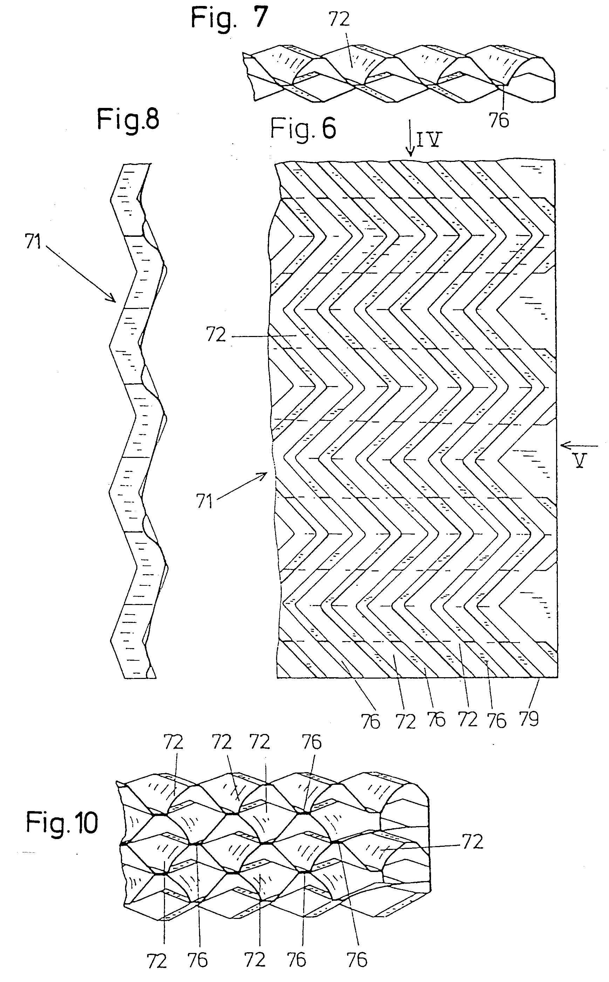

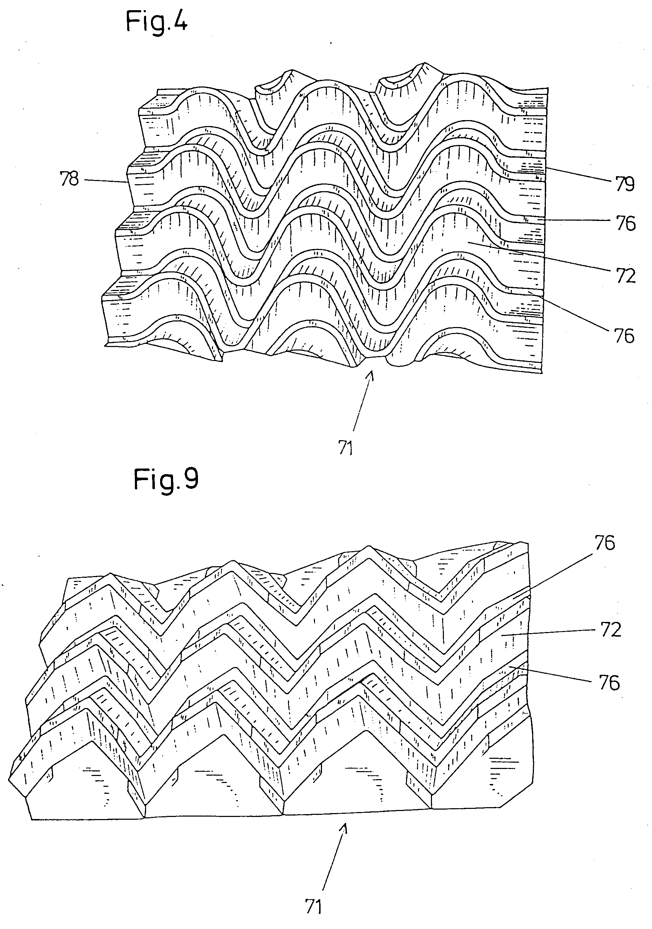

Das Ausführungsbeispiel nach den Fig. 6, 7, 8 und 9 besitzt ebenfalls räumlich verlaufende Rinnen 72 mit einer trapezförmigen Querschnittskontur. Die Querschnittsecken (Fig. 11) sind hier jedoch nicht auf einer stetigen geschlossenen Bewegungsbahn geführt, sondern auf einer Bewegungsbahn, die zwar auch umfangsgeschlossen ist, aber aus winkelig zueinander stehenden, mehr oder weniger geraden Abschnitten besteht, hier beispielsweise ist diese Bewegungsbahn in Achsrichtung der schraubenlinienartigen Hüllkurve gesehen durch einen Rhombus darstellbar. Diese Hüllkurven 76 verlaufen hier zwar auch nach Art einer Schraubenlinie, jedoch ist diese Schraubenlinie aus kurzen geraden Stücken gebildet. Bei den hier gebildeten Platten 71 (Fig. 6) laufen die Rinnen 72 gegenüber dem Randbereich 78 der Platte schräg aus.

Aus den Fig. 1 und 6 ist ersichtlich, daß die schraubenlinienartigen Hüllkurven 76, unabhängig davon, ob sie nun durch stetig verlaufende oder gerade verlaufende Bahnabschnitte gebildet sind, über ihre Länge eine gleichmäßige Steigung besitzen. Es liegt im Rahmen der Erfindung, über die Länge der Rinnen 72 die Steigung der schraubenlinienartigen Hüllkurven 76 zu variieren.

Fig. 10 zeigt nun einen Füllkörper 80, der aus Platten nach den Fig. 6 bis 8 gebildet ist, wobei hier die Rinnen 72 benachbarter Platten schraubenlinienartig kreuzen.

Bei den gezeigten Ausführungsbeispielen sind, um die Übersichtlichkeit der Darstellungen nicht zu beeinträchtigen, die Rinnen 72 jeweils mit glatten Wandungen dargestellt. Um den Verwirbelungseffekt für die Medien zu erhöhen und den Kontakt der Medien untereinander zu intensivieren, liegt es im Rahmen der Erfindung, daß mindestens einzelne Rinnen einer Platte wenigstens auf einem Teil ihrer Wandung beulenartige Aus- bzw. Einbuchtungen aufweisen und die gedachte Verbindungslinie von entlang einer Rinne aufeinanderfolgenden Ein- bzw. Ausbuchtungen nach Art einer Schraubenlinie verlaufen. Dabei kann die gedachte schraubenlinienartig verlaufende Verbindungslinie mit der Hüllkurve der äußeren Eck- bzw. Randbereiche der Rinne gleichlaufend liegen oder aber die gedachte schraubenlinienartig verlaufende Verbindungslinie liegt mit der Hüllkurve der äußeren Ecken bzw. äußeren Randbereich der Rinnen gegenläufig.

Wurden die Rinnen 72 der besprochenen Ausführungsbeispiele mit einer trapezartigen Querschnittskontur dargestellt, so ist abschließend noch zu erwähnen, daß diese Querschnittskontur auch andere Formen aufweisen kann.

## Patentansprüche

1. Füllkörper für Anlagen zum Energie- und/oder Stoffaustausch oder Tropfenabscheider, z.B. für Kühltürme, für Tropfkörper in biologischen Abwasserreinigungsanlagen oder für chemische Kolonnen, für Wärmetauscher im Direktkontakt von Medien, für Flüssigkeitsverteiler, Luftzubringer od. dgl. bestehend aus einer Vielzahl von zu einem Paket zusammengeschichteten Platten, wobei die einzelnen Platten im wesentlichen parallel zueinander verlaufende Rinnen aufweisen und die Rinnen die Durchlaßkanäle für die Medien bilden und die Querschnitte einer jeden Rinne über deren Länge hinsichtlich ihrer Form und Größe im wesentlichen einander gleich sind, dadurch gekennzeichnet, daß die Hüllkurven der aufeinanderfolgenden Rinnenquerschnitte durch die Randpunkte der einzelnen Rinnen zumindest über den größten Teil ihrer Länge nach Art einer Schraubenlinie verlaufen und alle Hüllkurven einer Platte achsparallel zueinander liegen und zueinander deckungsgleich sind.

2. Füllkörper nach Anspruch 1, dadurch gekennzeichnet, daß die Achsen der Durchlaßkanäle bzw. die Hüllkurven über ihre Länge aus im wesentlichen geraden, winkelig aufeinander folgenden Abschnitten bestehen.

3. Füllkörper nach Anspruch 1 oder 2, dadurch gekennzeichnet, daß die Hüllkurven in ihren Endabschnitten im Bereich der Plattenränder im wesentlichen parallel zur Haupterstreckungsrichtung der Durchlaßkanäle bzw. der Rinnen verlaufen.

4. Füllkörper nach Anspruch 1, dadurch gekennzeichnet, daß über die Länge der Durchlaßkanäle bzw. der Rinnen die Hüllkurven eine Drehung von mindestens 360 ° aufweisen.

5. Füllkörper nach Anspruch 1, dadurch gekennzeichnet, daß in der Haupterstreckungsrichtung eines Durchlaßkanals gesehen die diesem Durchlaßkanal zugeordnete Achse sich als oval oder als Vieleck darstellt.

6. Füllkörper nach Anspruch 5, dadurch gekennzeichnet, daß die längere der beiden im wesentlichen rechtwinklig zueinander stehenden Achsen der Ovale bzw. der Vielecke in oder parallel zu der gedachten Mittelebene der Platte liegen.

7. Füllkörper nach Anspruch 1, dadurch gekennzeichnet, daß die schraubenlinienartig verlaufenden Hüllkurven über die Länge der Rinnen bzw. Durchlaufkanäle eine unterschiedliche Steigung aufweisen.

8. Füllkörper nach einem der Ansprüche 1 bis 7, dadurch gekennzeichnet, daß die Hüllkurven von innerhalb eines Paketes unmittelbar benachbarter Platten d.h. die axial verlaufenden Ränder der Rinnen dieser Platten aneinander anliegen und so die Rinnen dieser Platten im wesentlichen umfangsgeschlossene, räumlich gewundene Durchlaßkanäle bilden.

9. Füllkörper nach einem der Ansprüche 1 bis 7, dadurch gekennzeichnet, daß die Hüllkurven von innerhalb eines Paketes unmittelbar benachbarter Platten miteinander einen Winkel einschließen und die räumlich gewundenen Rinnen benachbarter Platten sich kreuzen.

10. Füllkörper nach Anspruch 1, dadurch gekennzeichnet, daß der mittlere Radius der schraubenlinienartigen Hüllkurve etwa gleich oder kleiner als die Tiefe der Rinne ist.

11. Füllkörper nach Anspruch 1, dadurch gekennzeichnet, daß der mittlere Radius der schraubenlinienartig verlaufenden Achse etwa gleich oder größer als der Durchmesser des Durchlaßkanals ist.

12. Füllkörper nach einem der Ansprüche 1 bis 11, dadurch gekennzeichnet, daß die Steigungshöhe der schraubenlinienartigen Hüllkurve in Relation zu den Querschnittsabmessungen des Querschnitts des Durchlaßkanales mindestens etwa 1 : 1 beträgt.

## Claims

1. A packing for installations for energy and/or mass exchange or trickle separators, e.g. for cooling towers, for trickling filters in biological waste water purifying plants or for chemical columns, for heat exchangers with media in direct contact, for liquid distributors, air supply devices or the like, consisting of a plurality of plates stacked together to form a pack, the individual plates having grooves extending substantially parallel to one another and the grooves forming the filter channels for the media and the cross-sections of each groove over its length being substantially identical to one another with respect to their shape and size, characterized in that the envelope curves of the successive groove cross-sections through the marginal points of the individual grooves extend at least over the greatest part of their length in the shape of a helix and all the envelope curves of a plate lie axially parallel to one another and coincide with one another.

2. A packing according to claim 1, characterized in that the axes of the filter channels or the envelope curves over their length consist of substantially straight portions angularly following one another.

3. A packing according to claim 1 or 2, characterized in that the envelope curves in their end portions in the region of the plate edges extend substantially parallel to the main extension direction of the filter channels or of the grooves.

4. A packing according to claim 1, characterized in that over the length of the filter channels or of the grooves, the envelope curves exhibit a rotation of at least 360°.

5. A packing according to claim 1, characterized in that viewed in the main extension direction of a filter channel, the axis associated with this filter channel appears oval or polygonal.

6. A packing according to claim 5, characterized in that the longer of the two axes of the ovals or polygons situated substantially at right angles to one another lie in or are parallel to the hypothetical median plane of the plate.

7. A packing according to claim 1, characterized in that the envelope curves extending helically have a varying pitch over the length of the grooves or filter channels.

8. A packing according to one of claims 1 to 7, characterized in that the envelope curves of directly adjacent plates within a pack, i.e. the axially extending edges of the grooves of these plates, abut one another and thus the grooves of these plates form substantially peripherally closed, spatially wound filter channels.

9. A packing according to one of claims 1 to 7, characterized in that the envelope curves of immediately adjacent plates within a pack form an angle with each other and the spatially wound grooves of adjacent plates cross one another.

10. A packing according to claim 1, characterized in that the mean radius of the helical envelope curve is approximately equal to or smaller than the depth of the groove.

11. A packing according to claim 1, characterized in that the mean radius of the helically extending axis is approximately equal to or greater than the diameter of the filter channel.

12. A packing according to one of claims 1 to 11, characterized in that the pitch of the helical envelope curve in relation to the cross-sectional dimensions of the cross-section of the filter channel is at least about 1 : 1.

## Revendications

1. Corps de remplissage pour installations d'échange d'énergie et/ou de matière ou pour séparateurs de gouttes, par exemple des tours de refroidissement, pour corps de percolation d'installations d'épuration biologique d'eaux usées ou pour colonnes chimiques, pour échangeurs de chaleur en contact direct avec des milieux, pour distributeurs de liquides, pour systèmes d'alimentation en air, ou analogues, constitués d'une série de plaquettes stratifiées pour former un paquet, les plaquettes individuelles présentant des conduits s'étendant en substance parallèlement les uns aux autres, les conduits forment les canaux de passage pour les milieux et les sections transversales des conduits respectifs étant sensiblement égales les unes aux autres sur leur longueur en termes de forme et de dimension, caractérisés en ce que les enveloppantes des sections transversales successives des conduits passant par les points marginaux des conduits individuels s'étendent en hélice au moins sur la plus grande partie de leur longueur et toutes les enveloppantes d'une plaquette présentent des axes parallèles les uns aux autres et coïncident les unes avec les autres.

2. Corps de remplissage selon la revendication 1, caractérisés en ce que les axes des canaux de passage ou des enveloppantes sont constitués, sur leur longueur, de sections sensiblement rectilignes se suivant l'une l'autre en faisant un angle.

3. Corps de remplissage selon la revendication 1 ou 2, caractérisés en ce que les enveloppantes s'étendent, dans leurs sections terminales dans la zone des bords des plaquettes, en substance parallèlement à la direction d'extension principale des canaux de passage ou des conduits.

4. Corps de remplissage selon la revendication 1, caractérisés en ce que les enveloppantes présentent une rotation d'au moins 360° sur la longueur des canaux de passage ou des conduits.

5. Corps de remplissage selon la revendication 1, caractérisés en ce que, vu dans la direction d'extension principale d'un canal de passage, l'axe affecté à ce canal de passage se présente sous une forme ovale ou carrée.

6. Corps de remplissage selon la revendication 5, caractérisés en ce que les plus longs des deux axes sensiblement rectangulaires l'un à l'autre des ovales ou des carrés se trouvent dans le plan central imaginaire de la plaquette ou sont parallèles à ce plan.

7. Corps de remplissage selon la revendication 1, caractérisés en ce que les enveloppantes hélicoïdales présentent un pas différent sur la longueur des conduits ou des canaux de passage.

8. Corps de remplissage selon l'une quelconque des revendications 1 à 7, caractérisés en ce que les enveloppantes de plaquettes directement voisines dans un paquet, c'est-à-dire les bords s'étendant axialement des conduits de ces plaquettes, sont disposées bout à bout et, ce faisant, les conduits de ces plaquettes forment des canaux de passage sinueux spatialement et sensiblement fermés sur leur périphérie.

9. Corps de remplissage selon l'une quelconque des revendications 1 à 7, caractérisés en ce que les enveloppantes de plaquettes directement voisines dans un paquet inscrivent entre elles un angle et les conduits sinueux spatialement de plaquettes voisines se croisent.

10. Corps de remplissage selon la revendication 1, caractérisés en ce que le rayon moyen de l'enveloppante hélicoïdale est à peu près égal ou inférieur à la profondeur du conduit.

11. Corps de remplissage selon la revendication 1, caractérisés en ce que le rayon moyen de l'axe hélicoïdal est à peu près égal ou supérieur au diamètre du canal de passage.

12. Corps de remplissage selon l'une quelconque des revendications 1 à 11, caractérisés en ce que le pas hélicoïdal de l'enveloppante hélicoïdale par rapport aux dimensions de la section transversale du canal de passage atteint au moins environ 1:1.
